# EUROPEAN PATENT SPECIFICATION

(11) **EP 4 310 805 B1**
(45) Date of publication and mention of the grant of the patent: **19.08.2026**
(21) Application number: 23182522.5
(22) Date of filing: 29.06.2023
(51) Int. Cl.: G07D 11/17, B65H 7/14, B65H 9/00

(54) **APPARATUS AND METHOD FOR DETECTING SKEW OF BANKNOTES IN ATM**
VORRICHTUNG UND VERFAHREN ZUR ERKENNUNG VON BANKNOTENSCHRÄGLAGE IN ATM
APPAREIL ET PROCÉDÉ POUR DÉTECTER L'OBLIQUITÉ DE BILLETS DE BANQUE DANS UN ATM

(30) Priority: 19.07.2022 KR 20220088699
(43) Date of publication of application: 24.01.2024
(73) Proprietor: HYOSUNG TNS INC., Seoul 06349 (KR)
(72) Inventor: JANG, Hyun Soo, 16535 Suwon-si (KR); LIM, Jin You, 14081 Anyang-si (KR); SHIN, Da Hye, 21982 Incheon (KR)
(74) Representative: V.O.

(56) References cited:
- KR-A- 20160 001 063
- KR-A- 20200 144 387
- US-A1- 2018 370 745
- US-A1- 2019 291 994
- US-A1- 2022 153 544

## Description

### [Technical Field]

The present invention relates to an apparatus for detecting a skew of banknotes in an automated teller machine (ATM), and more particularly, to an apparatus for detecting a skew of banknotes in an ATM capable of more effectively and accurately detecting a defective conveying state of the banknotes passing through a conveying route by including a plurality of sensors configured to be arranged on the conveying route, where the banknotes put into the ATM are conveyed, at regular intervals from each other along a direction crossing the conveying route and detect tips of the banknotes passing through the conveying route to separately detect skew angles for each sector of the banknotes passing through the conveying route based on banknote tip detection signals detected from each detection sensor and support detection of various types of skews of the banknotes, including one-way skew of the banknotes as well as V-shaped skew at both ends inclined in different directions, and a method of detecting a skew of banknotes in an ATM.

### [Background Art]

In general, an automated teller machine (ATM) is mainly used for deposit and withdrawal of banknotes in financial institutions such as banks. Banknotes put into or taken out of the ATM by a request of a user for deposit and withdrawal are conveyed along a conveying route and are stored in a banknote cassette storing banknotes or are withdrawn through a deposit and withdrawal unit.

In this case, however, the banknotes conveyed in the ATM have a skew in which the banknotes are conveyed in a certain tilted state due to various reasons that occur during the input, drawing out, or conveyance of the banknote. The skew of the banknotes may cause operation errors such as jamming of the banknotes or damage to the banknotes during the transportation or loading of the banknotes into the banknote cassette. Accordingly, it is necessary to accurately detect a skew of banknotes passing through the conveying route and correct or recover the skew to prevent damage to the banknotes or malfunction of equipment.

Accordingly, as described in Patent No. 10-2019-0121518 as the related art, methods such as a method of detecting and correcting a skew of banknotes based on signals passing through tips of both ends of the banknotes detected by a pair of detection sensors provided on both sides of the tips of the banknotes passing through a conveying route through a plurality of detection sensors provided on the conveying route of the ATM in a direction crossing the conveying route are applied.

However, in the related art such as the above-mentioned Patent No. 121518, in detecting a skew of banknotes, a skew angle of the banknotes is detected using a pair of sensors disposed at both ends of a plurality of sensors provided on a conveying route. The method may be applied relatively usefully to detect a skew of banknotes tilted in one direction, but has a limitation in that it cannot effectively consider the skew of the banknotes that are conveyed after being deformed into an irregular shape, such as banknotes in which banknotes are partially crumpled or conveyed in a folded state, and thus, has a problem in that it cannot effectively prevent the occurrence of failures of the ATM such as jamming of the banknotes or operation errors of operation units during the conveyance, separation, or drawing out of the banknotes.

### [Related Art Document]

### [Patent Document]

1. Korean Patent Laid-Open Publication No. 10-2019-0121518 (Publication Date: October 28, 2019) "Method and apparatus for skew correction of media".

KR 2016 0001063 A discloses a device for aligning paper money for an automated teller machine, which aligns and transports the paper money which is slantingly transported. The automated teller machine comprises: a first paper money transport module for transporting the paper money while supporting a lower surface of the paper money; an alignment module disposed at a downstream of the first paper money transport module and having a parallel transport unit disposed in parallel along a transport direction of the paper money so as to transport the paper money at linear velocities different from each other; and a second paper money transport module disposed at a downstream of the alignment module to transport the paper money while supporting the lower surface of the paper money aligned by the alignment module.

US 2022/153544 Al discloses a conveying device including a first pair of nipping rollers, a second pair of nipping rollers, a position corrector configured to correct a position of a recording medium in a width direction of the recording medium, an end position detector configured to detect an end position of the recording medium in the width direction, and circuitry configured to, in adjustment of the end position detector, stop conveying the recording medium in response to arrival of a leading end of the recording medium at the end position detector, cause the position corrector to move the recording medium toward an outside of the conveyance passage in the width direction to a position at which the end position detector is covered by the recording medium, adjust the output of the end position detector, and cause the end position detector to detect the recording medium.

US 2019/291994 Al discloses a sheet conveying device, which is included in an image forming apparatus and a post processing device, including multiple position detectors and a position corrector. The multiple position detectors are aligned along a sheet conveying direction and configured to detect a side end of a sheet. The position corrector is configured to convey the sheet and correct a position of the sheet based on a positional deviation amount of the sheet, obtained by a detection result of the multiple position detectors. The positional deviation amount of the sheet is obtained by an extreme downstream position detector in the sheet conveying direction, of the multiple position detectors. A position of a subsequent sheet is corrected based on a sum of the positional deviation amount of the sheet and a positional deviation amount of the subsequent sheet.

US 2018/370745 Al discloses a paper sheet handling device including a paper sheet detection device configured to detect a paper sheet, and a handling unit performing handling related to the paper sheet based on the time when the paper sheet detection device detects an end of the paper sheet. The paper sheet detection device includes a pair of rolling bodies facing each other, disposed on a transport path transporting the paper sheet, and configured so that the paper sheet passes therebetween, and a detection unit detecting displacement of the rolling bodies when the paper sheet passes between the pair of rolling bodies to detect the paper sheet.

### [Disclosure]

### [Technical Problem]

The present invention has been made to solve the above problems, and the present invention provides an apparatus for detecting a skew of banknotes in an ATM capable of more effectively and accurately detecting a defective conveying state of the banknotes passing through a conveying route by including a plurality of sensors configured to be arranged on the conveying route, where the banknotes put into the ATM are conveyed, at regular intervals from each other along a direction crossing the conveying route and detect tips of the banknotes passing through the conveying route to separately detect skew angles for each sector of the banknotes passing through the conveying route based on banknote tip detection signals detected from each detection sensor and support detection of various types of skews of the banknotes, including one-way skew of the banknotes as well as V-shaped skew at both ends inclined in different directions, and a method of detecting a skew of banknotes in an ATM.

### [Technical Solution]

To achieve the above object, an apparatus for detecting a skew of banknotes conveyed along a conveying route in an ATM is provided. The apparatus according to claim 1 for detecting a skew of banknotes conveyed along a conveying route in an automated teller machine, comprising: a plurality of detection sensors configured to be arranged on a conveying route at regular intervals from each other along a direction crossing the conveying route and detect tips of the banknotes passing through the conveying route; and a microprocessor configured to determine whether the banknotes passing through the conveying route are skewed based on banknote tip detection signals detected from each sensor, wherein the microprocessor divides the banknotes into a plurality of banknote sectors along a width direction of the banknotes passing through the conveying route, calculates skew angles for each banknote sector of the divided banknotes based on the banknote tip detection signals detected by each of the detection sensors, and adds up the calculated skew angles for each sector and detects a skew amount of banknotes to determine whether the banknotes conveyed along the conveying route are skewed, wherein the plurality of detection sensors includes five detection sensors that are arranged at regular intervals from each other along a direction crossing the conveying route, and the microprocessor divides the banknotes passing through the conveying route into a left and a right banknote sector, and calculates the skew angles of the left and right banknote sectors based on the banknote tip detection signals detected from three detection sensors of the five detection sensors, wherein one sensor is arranged at a center and the two other sensors are arranged at both ends of the arrangement of the five detection sensors.

Also provided is a method of detecting a skew of banknotes conveyed through a plurality of detection sensors arranged at regular intervals from each other along a direction crossing a conveying route in an ATM, the method according to claim 3 comprising: detecting entry of tips of the banknotes passing through the conveying route at each arrangement position through the plurality of detection sensors; dividing the banknotes into a plurality of banknote sectors along a width direction of the banknotes passing through the conveying route, and calculating skew angles for each banknote sector of the divided banknotes based on banknote tip detection signals detected from the detection sensor; and detecting a skew amount of banknotes by adding up the calculated skew angles for each sector, wherein the banknotes are divided into a left and a right banknote sector along the width direction of the banknote passing through the conveying route, and the skew angles of the left and right banknote sectors are each calculated based on the banknote tip detection signals detected from three sensors of the plurality of sensors, wherein one sensor is arranged at a center and the two other sensors are arranged at both ends of the arrangement of the plurality of the detection sensors.

### [Advantageous Effects]

An apparatus for detecting a skew of banknotes in an automated teller machine according to the present invention includes a plurality of sensors configured to be arranged on the conveying route where the banknotes put into the ATM are conveyed and detect tips of the banknotes passing through the conveying route to separately detect skew angles for each sector of the banknotes passing through the conveying route based on banknote tip detection signals detected from each detection sensor and support detection of various types of skews of the banknotes, including one-way skew of the banknotes as well as V-shaped skew at both ends inclined in different directions, thereby more effectively and accurately detecting a defective state of the banknotes passing through the conveying route and preventing operational errors, such as jams that may occur in subsequent operations due to the skew of the banknotes, in advance.

### [Brief Description of the Drawings]

FIG. 1 is a diagram for describing a configuration of an apparatus for detecting a skew of banknotes in an automated teller machine according to an embodiment of the present invention.
FIG. 2 is a diagram for describing a process of detecting a skew of banknotes according to an embodiment of the present invention.

### [Best Mode]

The present invention may have various changes and various forms. The scope of the invention is defined by the appended claims. Hereinafter, specific embodiments of the present invention will be described in detail with reference to the drawings.

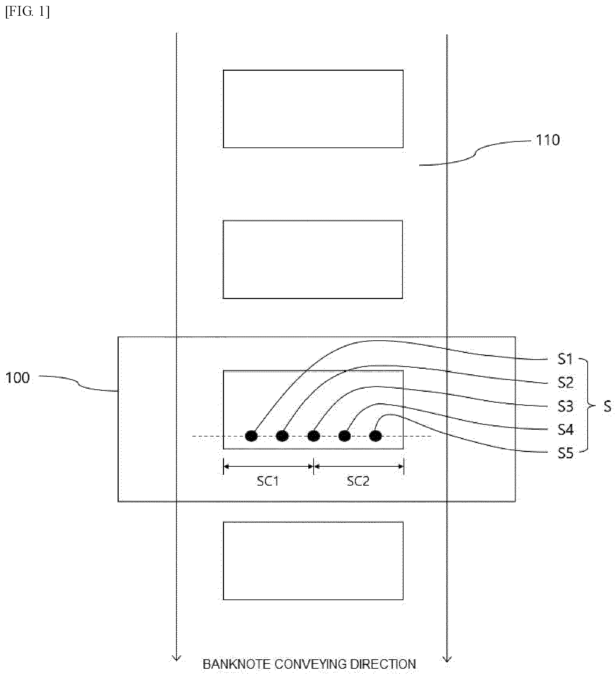

FIG. 1 is a diagram for describing a configuration of an apparatus for detecting a skew of banknotes in an automated teller machine according to an embodiment of the present invention.

As illustrated in FIG. 1, an apparatus 100 for detecting a skew of banknotes in an automated teller machine (ATM) according to an embodiment of the present invention is configured to include a plurality of detection sensors S that are arranged on a conveying route 110, where the banknotes put into the ATM are conveyed, at regular intervals from each other along a direction crossing the conveying route 110 and detect tips of the banknotes passing through the conveying route 110, and a microprocessor (not illustrated) that detects skew angles for each sector of the banknotes passing through the conveying route based on banknote tip detection signals detected from each sensor S1, S2, S3, S4, and S5 and determines the total skew amount of the passing banknotes.

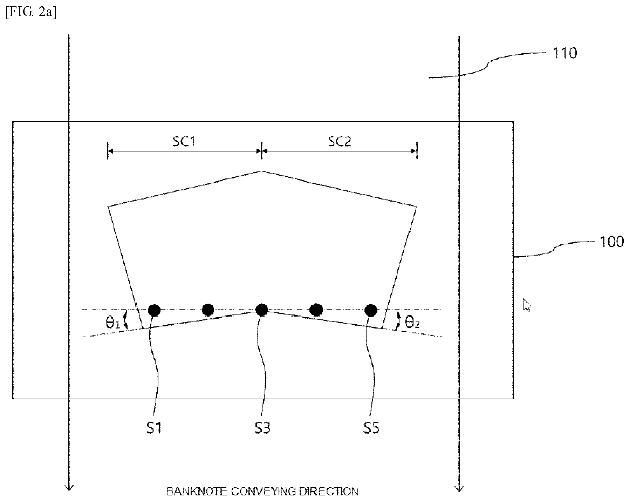

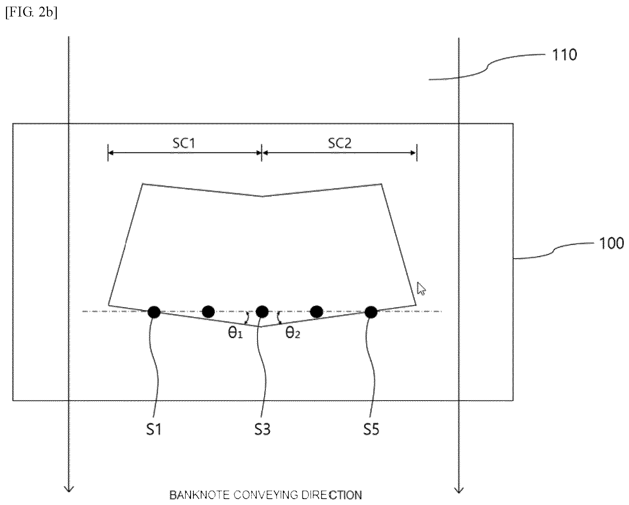

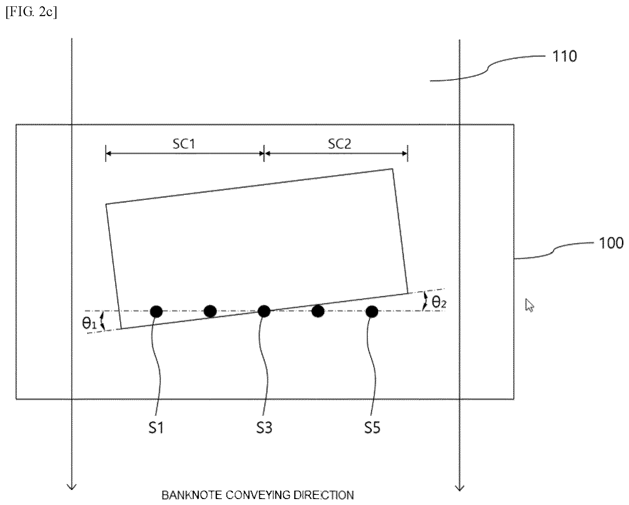

That is, according to the present invention, the plurality of detection sensors S detecting the tips of the banknotes passing through the conveying route 110 are provided on the conveying route 110 inside the ATM to separately detect skew angles for each sector of the banknotes passing through the conveying route 110 based on banknote tip detection signals detected from each detection sensor. According to the present embodiment, a process of dividing the passing banknote into left and right two sectors SC1 and SC2 and detecting the skew of the banknotes by using five detection sensors S1 to S5 disposed at regular intervals from each other along a direction crossing the conveying route 110 and in this regard, a process of detecting the skew angles for each sector of the passing banknote will be described in more detail with reference to FIG. 2.

Here, the detection sensor S provided in the apparatus 100 for detecting a skew of banknotes may be applied with various types of sensors for detecting whether the banknote enters, and an optical sensor or the like including a pair of a light emitting element and a light receiving element may be applied.

Hereinafter, a process of detecting a skew of banknotes through the apparatus for detecting a skew of banknotes according to the embodiment of the present invention will be described in more detail with reference to FIG. 2.

FIG. 2 is a diagram for describing a process of detecting a skew of banknotes according to an embodiment of the present invention.

In this embodiment, FIG. 1 above illustrates that a method of detecting a skew of banknotes passing through a conveying route 110 using five detection sensors S1, S2, S3, S4, and S5 is applied. In this case, the case where the banknotes passing through the conveying route 110 through three sensors S1, S3, and S5 each provided at a center and both ends among the five sensors S1, S2, S3, S4, and S5 are divided into two left and right sectors SC1 and SC2, and the skew angles are detected for each banknote sector is illustrated as an example.

FIG. 2A is an example showing a case where a portion of a tip of a banknote is crumpled or partially folded and conveyed in a "V" shape. As illustrated in FIG. 2A, a time at which the tip of the banknote is detected by each sensor S1, S3, and S5 changes according to the skew state of the banknotes conveyed along the conveying route 110, that is, an angle at which the both ends of the banknote are tilted. In this way, skew angles θ₁ and θ₂ for each banknote sector SC1 and SC2 may each be calculated by considering a difference in a banknote tip detection time between each detection sensor S1, S3, and S5 and a reaction speed of the banknote.

Looking at this in more detail, as illustrated in the drawings, the banknote passing through the conveying route 110 is divided into two left and right sectors SC1 and SC2 based on the arrangement position of each detection sensor S1, S3, and S5, and the skew angle θ₁ of the banknote in section 1 SC1 may be calculated through the difference in the banknote tip detection time between the first and third sensors S1 and S3, and the skew angle θ₂ of the banknote in sector 2 SC2 may be calculated through the difference in the banknote tip detection time between the third and fifth sensors S3 and S5.

The total skew amount θ₁ (θₜ = θ₁ + θ₂) of the banknote may be detected by adding up the skew angles θ₁ and θ₂ for each sector calculated in this way. The skew of the banknotes is determined based on the amount θₜ of the banknote detected in this way. In this case, when the detected skew amount θₜ of the banknote is less than a predetermined reference value (e.g., set to be 15° or 20°, etc.), it is determined that the corresponding banknote is conveyed normally, so the corresponding banknote is conveyed along the conveying route 110, while, when the detected skew amount θₜ of the banknote is greater than or equal to the predetermined reference value, it is determined that the skew has occurred in the corresponding banknote, so a series of processes of correcting the skew of the banknotes may be performed by recovering the corresponding banknote, using the skew corrector briefly described above, or the like.

Similarly, FIG. 2B is an example showing a case where a part of a rear end of the banknote is crumpled or partially folded and conveyed in an inverted "V" shape in an opposite direction to that of FIG. 2A. The skew angles θ₁ and θ₂ for each sector SC1 and SC2 of the banknotes divided into left and right sectors may each be calculated through the difference in the banknote tip detection time detected by the first and third sensors S1 and S3 and the difference in the banknote tip detection time detected by the third and fifth sensors S3 and S5 to detect the total skew amount θₜ of the banknotes passing through the conveying route 110.

In addition, FIG. 2C is an example showing the case in which the banknote is conveyed in a state inclined in one direction. Even in this case, it goes without saying that the total skew amount θₜ of the banknotes passing through the conveying route 110 may be detected by calculating the skew angles θ₁ and θ₂ for each banknote sector SC1 and SC2 using the difference in the banknote tip detection time detected by each sensor S1, S3, and S5.

As described above, in the present invention, the total skew amount of the passing banknotes is determined by separately detecting the skew angles for each sector of the banknotes passing through the conveying route based on the banknote tip passing signals detected by each of the plurality of detection sensors provided on the conveying route inside the ATM to support more effective detection of the skew of the banknotes that is conveyed after being deformed into an irregular shape, such as a V-shaped skew having both ends inclined in different directions in addition to one-way skew of banknotes, thereby more effectively and accurately detecting a defective conveying state of the banknotes passing through the conveying route and preventing operational errors, such as jams that may occur in subsequent operations due to the skew of the banknotes, in advance.

As described above, the apparatus for detecting a skew of banknotes in an ATM according to the present invention includes a plurality of sensors that are configured to be arranged on the conveying route, where the banknotes put into the ATM are conveyed, at regular intervals from each other along a direction crossing the conveying route and detect tips of the banknotes passing through the conveying route to separately detect skew angles for each sector of the banknotes passing through the conveying route based on banknote tip detection signals detected from each detection sensor and support detection of various types of skews of the banknotes, including one-way skew of the banknotes as well as V-shaped skew at both ends inclined in different directions, thereby more effectively and accurately detecting a defective conveying state of the banknotes passing through the conveying route.

In addition, the present invention described above is not limited by the above-described embodiments and accompanying drawings, and it will be clear to those skilled in the art that various substitutions, modifications, and changes are possible within the scope of the present invention as long as such modifications fall under the scope of the appended claims.

## Claims

1. An apparatus (100) for detecting a skew of banknotes conveyed along a conveying route (110) in an automated teller machine (ATM), the apparatus comprising:
a plurality of detection sensors (S1, S2, S3, S4, S5) configured to be arranged on a conveying route (110) at regular intervals from each other along a direction crossing the conveying route (110) and detect tips of the banknotes passing through the conveying route; and
a microprocessor configured to determine whether the banknotes passing through the conveying route (110) are skewed based on banknote tip detection signals detected from each sensor (S1, S2, S3, S4, S5),
wherein the microprocessor divides the banknotes into a plurality of banknote sectors (SC1, SC2) along a width direction of the banknotes passing through the conveying route (110),
calculates skew angles for each banknote sector of the divided banknotes based on the banknote tip detection signals detected by each of the detection sensors (S1, S2, S3, S4, S5), and
adds up the calculated skew angles for each sector and detects a skew amount of banknotes to determine whether the banknotes conveyed along the conveying route (110) are skewed, wherein
the plurality of detection sensors includes five detection sensors (S1, S2, S3, S4, S5) that are arranged at regular intervals from each other along a direction crossing the conveying route (110), and
the microprocessor divides the banknotes passing through the conveying route (110) into a left and a right banknote sector (SC1, SC2), and calculates the skew angles of the left and right banknote sectors (SC1, SC2) based on the banknote tip detection signals detected from three detection sensors (S1, S3, S5) of the five detection sensors (S1, S2, S3, S4, S5), wherein one sensor (S2) is arranged at a center and the two other sensors (S1 and S5) are arranged at both ends of the arrangement of the five detection sensors (S1, S2, S3, S4, S5).

2. The apparatus of claim 1, wherein the detection sensor is an optical sensor including a pair of a light emitting element and a light receiving element.

3. A method of detecting a skew of banknotes conveyed through a plurality of detection sensors (S1, S2, S3, S4, S5) arranged at regular intervals from each other along a direction crossing a conveying route (110) in an ATM, the method comprising:
detecting entry of tips of the banknotes passing through the conveying route (110) at each arrangement position through the plurality of detection sensors (S1, S2, S3, S4, S5);
dividing the banknotes into a plurality of banknote sectors (SC1, SC2) along a width direction of the banknotes passing through the conveying route (110), and calculating skew angles for each banknote sector (SC1, SC2) of the divided banknotes based on banknote tip detection signals detected from the detection sensor; and
detecting a skew amount of banknotes by adding up the calculated skew angles for each sector (SC1, SC2), wherein the banknotes are divided into a left and a right banknote sector (SC1, SC2) along the width direction of the banknote passing through the conveying route (110), and
the skew angles of the left and right banknote sectors (SC1, SC2) are each calculated based on the banknote tip detection signals detected from three sensors (S1, S3, S5) of the plurality of sensors (S1, S2, S3, S4, S5), wherein one sensor (S2) is arranged at a center and the two other sensors (S1 and S5) are arranged at both ends of the arrangement of the plurality of the detection sensors (S1, S2, S3, S4, S5).

4. The method of claim 3, wherein, when the detected skew amount of the banknotes is equal to or greater than a predetermined reference value, it is determined that the skew has occurred in the corresponding banknote.

5. The method of claim 4, further comprising:
when it is determined that the skew has occurred in the banknote, correcting the skew of the corresponding banknote through a skew correction device provided in the conveying route (110).

## Patentansprüche

1. Vorrichtung (100) zur Erkennung einer Schräglage von Banknoten, die entlang eines Förderwegs (110) in einem Geldautomaten (ATM) befördert werden, wobei die Vorrichtung Folgendes umfasst:
eine Vielzahl von Erkennungssensoren (S1, S2, S3, S4, S5), die dazu konfiguriert sind, auf einem Förderweg (110) in regelmäßigen Abständen zueinander entlang einer den Förderweg (110) kreuzenden Richtung angeordnet zu sein und Vorderkanten der den Förderweg durchlaufenden Banknoten zu erfassen; und
einen Mikroprozessor, der dazu konfiguriert ist, basierend auf den von jedem Sensor (S1, S2, S3, S4, S5) erkannten Signalen zur Erkennung von Banknotenvorderkanten zu bestimmen, ob die den Förderweg (110) durchlaufenden Banknoten schräg liegen,
wobei der Mikroprozessor die Banknoten entlang einer Breitenrichtung der den Förderweg (110) durchlaufenden Banknoten in eine Vielzahl von Banknotensektoren (SC1, SC2) unterteilt,
Schräglagenwinkel für jeden Banknotensektor der unterteilten Banknoten basierend auf den von jedem der Erkennungssensoren (S1, S2, S3, S4, S5) erkannten Signalen zur Erkennung von Banknotenvorderkanten berechnet, und
die berechneten Schräglagenwinkel für jeden Sektor summiert und einen Schräglagenbetrag der Banknoten erkennt, um zu bestimmen, ob die entlang des Förderwegs (110) beförderten Banknoten schräg liegen, wobei
die Vielzahl von Erkennungssensoren fünf Erkennungssensoren (S1, S2, S3, S4, S5) einschließt, die in regelmäßigen Abständen zueinander entlang einer den Förderweg (110) kreuzenden Richtung angeordnet sind, und
der Mikroprozessor die den Förderweg (110) durchlaufenden
Banknoten in einen linken und einen rechten Banknotensektor (SC1, SC2) unterteilt und die Schräglagenwinkel des linken und rechten Banknotensektors (SC1, SC2) basierend auf den von drei Erkennungssensoren (S1, S3, S5) der fünf Erkennungssensoren (S1, S2, S3, S4, S5) erkannten Signalen zur Erkennung von Banknotenvorderkanten berechnet, wobei ein Sensor (S2) in einer Mitte angeordnet ist und die beiden anderen Sensoren (S1 und S5) an den beiden Enden der Anordnung der fünf Erkennungssensoren (S1, S2, S3, S4, S5) angeordnet sind.

2. Vorrichtung nach Anspruch 1, wobei der Erkennungssensor ein optischer Sensor ist, der ein Paar aus einem lichtemittierenden Element und einem lichtempfangenden Element einschließt.

3. Verfahren zur Erkennung einer Schräglage von Banknoten die befördert werden, durch eine Vielzahl von Erkennungssensoren (S1, S2, S3, S4, S5), die in regelmäßigen Abständen zueinander entlang einer einen Förderweg (110) in einem ATM kreuzenden Richtung angeordnet sind, wobei das Verfahren Folgendes umfasst:
Erkennen des Eintritts von Vorderkanten der den Förderweg (110) durchlaufenden Banknoten an jeder Anordnungsposition durch die Vielzahl von Erkennungssensoren (S1, S2, S3, S4, S5);
Unterteilen der Banknoten in eine Vielzahl von Banknotensektoren (SC1, SC2) entlang einer Breitenrichtung der den Förderweg (110) durchlaufenden Banknoten, und Berechnen der Schräglagenwinkel für jeden Banknotensektor (SC1, SC2) der unterteilten Banknoten basierend auf den von dem Erkennungssensor erkannten Signalen zur Erkennung von Banknotenvorderkanten; und
Erkennen eines Schräglagenbetrags von Banknoten durch Summieren der berechneten Schräglagenwinkel für jeden Sektor (SC1, SC2), wobei die Banknoten in einen linken und einen rechten Banknotensektor (SC1, SC2) entlang der Breitenrichtung der den Förderweg (110) durchlaufenden Banknote unterteilt werden, und
die Schräglagenwinkel des linken und des rechten Banknotensektors (SC1, SC2) jeweils basierend auf den von drei Sensoren (S1, S3, S5) erkannten Signalen zur Erkennung von Banknotenvorderkanten der Vielzahl von Sensoren (S1, S2, S3, S4, S5) berechnet werden, wobei ein Sensor (S2) in der Mitte angeordnet ist und die beiden anderen Sensoren (S1 und S5) an den beiden Enden der Anordnung der Vielzahl von Erkennungssensoren (S1, S2, S3, S4, S5) angeordnet sind.

4. Verfahren nach Anspruch 3, wobei, wenn der erkannte Schräglagenbetrag der Banknoten gleich oder größer als ein vorbestimmter Referenzwert ist, bestimmt wird, dass bei der entsprechenden Banknote eine Schräglage aufgetreten ist.

5. Verfahren nach Anspruch 4, ferner umfassend:
wenn bestimmt wird, dass bei der Banknote eine Schräglage aufgetreten ist, Korrigieren der Schräglage der entsprechenden Banknote durch ein in dem Förderweg (110) bereitgestelltes Schräglagenkorrekturgerät.

## Revendications

1. Appareil (100) destiné à détecter une obliquité de billets de banque acheminés le long d'un trajet de transport (110) dans un guichet automatique bancaire (ATM), l'appareil comprenant :
une pluralité de capteurs de détection (S1, S2, S3, S4, S5) configurés pour être agencés sur un trajet de transport (110) à intervalles réguliers les uns par rapport aux autres le long d'une direction croisant le trajet de transport (110) et pour détecter les pointes des billets de banque passant par le trajet de transport ; et
un microprocesseur configuré pour déterminer si les billets de banque passant par le trajet de transport (110) sont obliques sur la base de signaux de détection de pointe de billet de banque détectés par chaque capteur (S1, S2, S3, S4, S5),
dans lequel le microprocesseur divise les billets de banque en une pluralité de secteurs de billet de banque (SC1, SC2) le long d'une direction de largeur des billets de banque passant par le trajet de transport (110),
calcule les angles d'obliquité pour chaque secteur de billet de banque des billets de banque divisés sur la base des signaux de détection de pointe de billet de banque détectés par chacun des capteurs de détection (S1, S2, S3, S4, S5), et
additionne les angles d'obliquité calculés pour chaque secteur et détecte une quantité d'obliquité des billets de banque pour déterminer si les billets de banque acheminés le long du trajet de transport (110) sont obliques, dans lequel
la pluralité de capteurs de détection comporte cinq capteurs de détection (S1, S2, S3, S4, S5) qui sont agencés à intervalles réguliers les uns par rapport aux autres le long d'une direction croisant le trajet de transport (110), et
le microprocesseur divise les billets de banque passant par le trajet de transport (110) en un secteur de billet de banque gauche et un secteur de billet de banque droit (SC1, SC2), et calcule les angles d'obliquité des secteurs de billet de banque gauche et droit (SC1, SC2) sur la base des signaux de détection de pointe de billet de banque détectés par trois capteurs de détection (S1, S3, S5) des cinq capteurs de détection (S1, S2, S3, S4, S5), dans lequel un capteur (S2) est agencé au centre et les deux autres capteurs (S1 et S5) sont agencés aux deux extrémités de l'agencement des cinq capteurs de détection (S1, S2, S3, S4, S5).

2. Appareil selon la revendication 1, dans lequel le capteur de détection est un capteur optique comportant une paire composée d'un élément émetteur de lumière et d'un élément récepteur de lumière.

3. Procédé de détection d'une l'obliquité de billets de banque acheminés, par une pluralité de capteurs de détection (S1, S2, S3, S4, S5) agencés à intervalles réguliers les uns par rapport aux autres le long d'une direction croisant un trajet de transport (110) dans un ATM, le procédé comprenant les étapes suivantes :
détecter une entrée de pointes des billets de banque passant par le trajet de transport (110) à chaque position d'agencement par la pluralité de capteurs de détection (S1, S2, S3, S4, S5) ;
diviser les billets de banque en une pluralité de secteurs de billet de banque (SC1, SC2) le long d'une direction de largeur des billets de banque passant par le trajet de transport (110), et calculer les angles d'obliquité pour chaque secteur de billet de banque (SC1, SC2) des billets de banque divisés sur la base de signaux de détection de pointe de billet de banque détectés par le capteur de détection ; et
détecter une quantité d'obliquité des billets de banque en additionnant les angles d'obliquité calculés pour chaque secteur (SC1, SC2), dans lequel les billets de banque sont divisés en un secteur de billet de banque gauche et un secteur de billet de banque droit (SC1, SC2) le long de la direction de largeur du billet de banque passant par le trajet de transport (110), et
les angles d'obliquité des secteurs de billet de banque gauche et droit (SC1, SC2) sont chacun calculés sur la base des signaux de détection de pointe de billet de banque détectés par trois capteurs (S1, S3, S5) de la pluralité de capteurs (S1, S2, S3, S4, S5), dans lequel un capteur (S2) est agencé au centre et les deux autres capteurs (S1 et S5) sont agencés aux deux extrémités de l'agencement de la pluralité des capteurs de détection (S1, S2, S3, S4, S5).

4. Procédé selon la revendication 3, dans lequel, lorsque la quantité d'obliquité détectée des billets de banque est égale ou supérieure à une valeur de référence prédéterminée, on détermine la présence d'une l'obliquité dans le billet de banque correspondant.

5. Procédé selon la revendication 4, comprenant en outre l'étape suivante :
lorsqu'il est déterminé que l'obliquité dans le billet de banque est présente, corriger l'obliquité du billet de banque correspondant par un dispositif de correction d'obliquité prévu dans le trajet de transport (110).
